# EUROPÄISCHE PATENTANMELDUNG

(11) **EP 1 559 929 A2**
(43) Veröffentlichungstag der Anmeldung: **03.08.2005**
(21) Anmeldenummer: 05001415.8
(22) Anmeldetag: 25.01.2005
(51) Int. Cl.: F16H 25/22

(54) **Kugelgewindetrieb mit Gangumlenkung und Herstellungsverfahren für einen solchen**

(30) Priorität: 28.01.2004 DE 102004004145
(71) Anmelder: Neff Antriebstechnik Automation GmbH, 71111 Waldenbuch (DE)
(72) Erfinder: Hermann, Martin, Dr., 71063 Sindelfingen (DE); Kreutzkämper, Jürgen, 74915 Waibstadt-Daisbach (DE)
(74) Vertreter: Rüger, Barthelt & Abel Patentanwälte

(57) **Zusammenfassung**

Ein Kugelgewindetrieb (1) weist eine Gewindemutter (3) auf, die mit wenigstens einem Umlenkstück (9) versehen ist, das zwei Enden (8a, 8b) einer Windung (8) ihres Innengewindes (5) miteinander verbindet. In unmittelbarer Nachbarschaft zu dem Umlenkstück (9) sind an den Enden (8a, 8b) der Windung (8) Übergangsprofile (19, 21) ausgebildet, die maschinell in den Gewindegang eingearbeitet sind. Das Übergangsprofil (19, 21) unterscheidet sich von dem Tragprofil des übrigen Gewindes dadurch, dass die Kugeln, wenn sie sich in dem Übergangsprofil (19, 21) befinden, ein gewisses Spiel aufweisen, während sie innerhalb der übrigen Windung (8) spielfrei unter Last stehen. Dies wird durch eine Änderung des Profils und/oder durch eine Vertiefung des Gewindeprofils radial nach außen erreicht.

## Beschreibung

Die Erfindung betrifft ein Verfahren zur Herstellung einer Spindelmutter mit Gangumlenkung für einen Kugelgewindetrieb. Außerdem betrifft die Erfindung mit einer solchen Spindelmutter aufgebauten Kugelgewindetrieb.

Bei Kugelgewindetrieben müssen zwischen der gewindeartigen Lauffläche einer Gewindespindel und einer entsprechenden gewindeartig ausgebildeten Lauffläche einer Gewindemutter angeordnete Kugeln an geeigneten Stellen zwischen verschiedenen Windungen der Laufbahn bzw. zwischen Anfang und Ende einer Windung umgesetzt werden, so dass sie im Kreislauf geführt sind. Die Laufbahn der Gewindemutter und die Laufbahn der Gewindespindel bilden miteinander einen Kanal, der mit Kugeln gefüllt ist. Die Kugeln lagern die Gewindemutter und die Gewindespindel drehbar zueinander, wobei sie radiale und axiale Lasten übertragen. Zum Umsetzen müssen die Kugeln entlastet und aus diesem Kanal heraus sowie an anderer Stelle wieder eingeführt werden.

Die Umlenkung von Kugeln bzw. das Umsetzen zwischen verschiedenen dem jeweiligen Anfang und Ende der Windungen erfolgt in der Regel durch Umlenkteile aus Kunststoff, die eine Umlenkbahn aufweisen. Die Umlenkbahn schließt an die gewundene Laufbahn der Gewindemutter an. Um einen möglichst stufenarmen oder stufenlosen Übergang zu erzielen, wird dieser in der Regel von Hand eingeschliffen. Die damit beschäftigten Personen müssen eine erhebliche Handfertigkeit aufweisen. Die Laufruhe des Kugelgewindetriebs, das zu seiner Bewegung erforderliche Drehmoment und seine Lebensdauer hängen davon entscheidend ab.

Davon ausgehend ist es Aufgabe der Erfindung, ein Verfahren zur vereinfachten Herstellung eines Kugelgewindetriebs zu schaffen, mit dem sich eine hohe Laufruhe und eine gute Laufqualität des Kugelgewindetriebs bei hoher Lebenserwartung desselben erreichen lässt.

Des Weiteren ist es Aufgabe der Erfindung, einen Kugelgewindetrieb zu schaffen, der sich auf einfache Weise herstellen lässt.

Diese Aufgaben werden mit dem Verfahren nach Anspruch 1 sowie dem Kugelgewindetrieb nach Anspruch 10 gelöst:
Bei dem erfindungsgemäßen Verfahren wird in mehreren Schritten mit zwangsgeführten Werkzeugen an der Gewindemutter eine Laufbahngeometrie erzeugt, die Tragprofile und Übergangsprofile aufweist. Die Übergangsprofile sind jeweils Umlenkstellen benachbart angeordnet. Durch die zwangsgeführten Werkzeugen ausgearbeiteten Übergangsprofile kann auf ein Handeinschleifen der Übergangsstellen an der Spindelmutter verzichtet werden. Dies erhöht die Prozesssicherheit erheblich.

Des Weiteren eröffnet die maschinelle Herstellung von Übergangsprofilen die Möglichkeit der Schaffung relativ langer Gewindemuttern mit Gangumsetzung. Dies bedeutet, dass die Kugeln jeweils zwischen benachbarten Anfang und Ende einer Windung eines Gewindegangs umgesetzt werden. Die in der Tiefe der Gewindemutter liegende Umlenkstellen sind für Handeinschleifverfahren kaum zugänglich. Mit Scheibenfräsern, Schleifscheiben oder dergleichen sind diese Stellen maschinell jedoch gut zu erreichen.

Ein weiterer Vorzug des erfindungsgemäßen Verfahrens liegt darin, dass die Geometrie der Gewindemutter in ungehärtetem Zustand derselben fertig gestellt werden kann. Damit betrifft der nachfolgende Härtevorgang nicht nur das Tragprofil sondern auch das Übergangsprofil. Dies erhöht die Qualität der Spindelmutter im Vergleich zu Handeingeschliffenen. An den Härtevorgang kann sich nochmals ein Schleifvorgang anschließen, bei dem der Materialabtrag jedoch gering ist. Der Schleifvorgang kann das Tragprofil und/oder das Übergangsprofil betreffen. Jedenfalls wird eine Spindelmutter mit geometrisch definiertem Profil erzeugt.

Das bevorzugte Verfahren_zur Herstellung des Übergangsprofils ist ein Fräs- oder Schleifverfahren, bei dem nach dem Herstellen des Tragprofils, beispielsweise in einem Drehvorgang oder in einem Fräsvorgang das Übergangsprofil in den Bereichen der zuvor ausgefrästen Radialöffnungen ausgebildet wird. Dies kann beispielsweise mit einem Scheibenfräser oder mit einer Schleifscheibe geschehen, deren Durchmesser kleiner als der Innendurchmesser der Gewindemutter ist. Die Drehachse dieser Schleifscheibe oder des entsprechenden Scheibenfräsers wird dazu in einem spitzen Winkel zu der Längsachse der Spindelmutter gehalten, wobei der Winkel mit dem Steigungswinkel des Gewindes übereinstimmt. Die Schleifscheibe oder der Scheibenfräser werden dann so geführt, dass das Tragprofil etwa tangential angeschnitten wird, wobei das betreffende Werkzeug dann auf einer geraden oder leicht gekrümmten Bahn geführt wird, um das Übergangsprofil auszubilden. Es dient dazu, die entsprechende Kugel noch vor dem Eintritt in das Umlenkstück zu entlasten, um einen lastfreien und leichten Übergang zwischen der Laufbahn und dem Umlenkstück zu ermöglichen. Das Übergangsprofil kann auch erodiert oder gedreht werden. Beim Drehen (Unrund-Drehen) wird dem Drehmeißel bei langsamer Drehung des Werkstücks eine Radial-Zustellstellbewegung erteilt.

Der Scheibenfräser oder die Schleifscheibe können einen abgerundeten Querschnitt z.B. mit einer außenliegenden Thorusfläche aufweisen, um einen Rundbogen zu erzeugen. Es kann auch ein abgeflachter Rundbogen erzeugt werden. Dazu weist der Scheibenfräser oder die Schleifscheibe abgerundete Stirnkanten auf. Es ist auch möglich, eine Schleifscheibe oder einen Fräser mit relativ scharfen Stirnkanten zu verwenden, wobei die eingesetzten Umlenkstücke dann vorzugsweise gabelartige Fortsätze zum Ausfüllen des Profils aufweisen.

Es ist auch möglich, eine Schleifscheibe oder einen Fräser zu verwenden, deren bzw. dessen Profil mit dem Tragprofil übereinstimmt. Der so erzeugte Bahnabschnitt bildet ein radial nach außen verlagertes Tragprofil und somit ebenfalls ein Übergangsprofil, das zur Entlastung der Kugeln in dem betreffenden Bahnbereich führt. Wesentlich ist somit, dass durch die Bearbeitung der Laufbahn an den den Umlenkstellen benachbarten Stellen mit einem maschinengeführten Werkzeug Bahnabschnitte erzeugt werden, die gegenüber den sonstigen Tragprofilen radial etwas nach außen versetzt sind, um die Kugeln in Nachbarschaft zu den Umlenkstücken definiert zu entlasten.

Die in dem Anspruch genannten Schritte werden vorzugsweise entsprechend ihrer Nummerierung in aufsteigender Folge nacheinander durchgeführt. Es ist jedoch auch möglich, die Reihenfolge der Schritte zu ändern. Der Anspruch 1 trifft insoweit keine Festlegung.

Der erfindungsgemäße Kugelgewindetrieb weist an einzelnen axial und in Umfangsrichtung beabstandeten Stellen Umlenkstücke auf, die eine Umsetzung der Kugeln zwischen benachbarten Windungen bzw. Anfang und Ende einer Windung eines Gewindegangs bewirken. Dieses Übergangsprofil wird mit einem zwangsgeführten Werkzeug maschinell erzeugt und weist somit eine definierte Geometrie auf. Damit kann das in diesem Bereich vorhandene Spiel der Kugeln so festgelegt werden, dass die Kugeln einerseits entlastet sind und andererseits nicht zu viel Spiel aufweisen. Dies führt zu einem gleichmäßigen ruckfreien Lauf des Kugelgewindetriebs, der mit geringem Antriebsdrehmoment zu bewirken ist. Außerdem kommt dies der Lebensdauer der Kugeln der Spindelmutter und der Gewindespindel zugute.

Das Tragprofil ist vorzugsweise ein Spitzbogenprofil während das Umlenkprofil ebenfalls ein Spitzbogenprofil oder vorzugsweise ein Rundbogenprofil sein kann. Es schließt sich zu beiden Seiten an die Radialöffnungen an, die zur Aufnahme von Umlenkstücken dienen. Die Umlenkstücke sind vorzugsweise aus Kunststoff gefertigt.

Die Radialöffnungen weisen bei einer vorteilhaften Ausführungsform einen Langlochquerschnitt auf. Damit ist eine Verdrehung der Umlenkstücke ausgeschlossen. Die Längsrichtung des Langlochquerschnitts ist vorzugsweise in einem Winkel von 45° gegen die Windung des Innengewindes geneigt. Dadurch wird einerseits ein relativ kurzer Übergangsbereich und andererseits eine Kugelumlenkung mit nicht zu geringen Radien erreicht.

Das Umlenkstück ist vorzugsweise aus zwei Teilstücken zusammengesetzt. Die Teilstücke können jeweils hinterschneidungsfrei gestaltet werden, so dass die Herstellung im Spritzgussverfahren einfach, kostengünstig und prozesssicher ist. Beide Teilstücke sind vorzugsweise an einer dem Umlenkkanal längs durchschneidenden Trennebene zusammengesetzt und durch geeignete Befestigungsmittel aneinander gesichert. Als Befestigungsmittel können beispielsweise Kegelnoppen und entsprechende Ausnehmungen dienen. Vorzugsweise sind beide Teilstücke liniensymmetrisch zueinander ausgebildet, wodurch ein einziger Teiletyp zur Herstellung der Umlenkstücke ausreicht. Bedarfsweise können die Teilstücke über ein Filmscharnier miteinander verbunden sein um die Handhabung beim Zusammensetzen, d.h. bei der Montage zu erleichtern.

Die Umlenkstücke werden vorzugsweise von innen her in die entsprechenden Radialöffnungen eingesetzt. Anschlagflächen dienen dann zur Sicherung der Umlenkstücke an ihrem Platz. Dadurch wird einerseits eine einfache und kostengünstige Montage und andererseits ein sicherer Sitz der Umlenkstücke erreicht. Eine Verlagerung, die zu Übergangskanten zwischen der Umlenkbahn und der Laufbahn führen könnte, ist weitgehend ausgeschlossen.

Die Umlenkbahn ist vorzugsweise krümmungsstetig ausgebildet, d.h. die Bahnkrümmung ändert sich an keiner Stelle sprunghaft. Dadurch wird ein ruhiger Kugellauf an Übergängen zwischen Anfang und Ende der Windungen des Gewindes erreicht. Ebenfalls der Laufruhe dient eine V-förmig ausgebildete Kante zwischen dem Übergangsprofil und dem Tragprofil. Diese ergibt sich wenn das von den Tragprofilen gebildete Gewinde tangential angeschnitten wird, was beim Anschleifen oder Einfräsen des Übergangsprofils der Fall ist.

Vorzugsweise weisen das Übergangsprofil der Spindelmutter und das Profil der Umlenkbahn des Umlenkstücks die gleiche Krümmung auf, so dass die Kugel beim Übertritt von dem Übergangsprofil in die Umlenkbahn des Umlenkstücks kein geändertes Bahnprofil vorfindet. Auch dies kommt der Laufruhe zugute.

Weitere Einzelheiten vorteilhafter Ausführungsformen sind Gegenstand der Zeichnung, der Beschreibung oder von Ansprüchen.

In der Zeichnung ist ein Ausführungsbeispiel der Erfindung veranschaulicht. Es zeigen:
- Figur 1: einen Gewindetrieb in einer teilweise aufgeschnittenen schematischen Darstellung,
- Figur 2: die Spindelmutter des Kugelgewindetriebs nach Figur 1 in perspektivischer Darstellung,
- Figur 3: die Spindelmutter nach Figur 2 in einer Stirnansicht,
- Figur 4: die Spindelmutter nach Figur 2 längs geschnitten mit Blick auf die Windungen ihres Gewindes und auf ein Umlenkstück in ausschnittsweiser vergrößerter Darstellung,
- Figur 5: die Gewindemutter nach Figur 4 geschnitten entlang der Linie V-V, in vereinfachter Darstellung,
- Figur 6: die Gewindemutter nach Figur 5 entsprechend geschnitten und in perspektivischer Darstellung,
- Figur 7: einen quer geschnittenen Ausschnitt aus der Gewindemutter nach Figur 2 und 3 sowie die Bewegung des Schleif- oder Fräswerkzeugs zur Ausbildung des Übergangsprofils und
- Figur 8: ein Teilstück des Umlenkstücks in perspektivischer Darstellung.

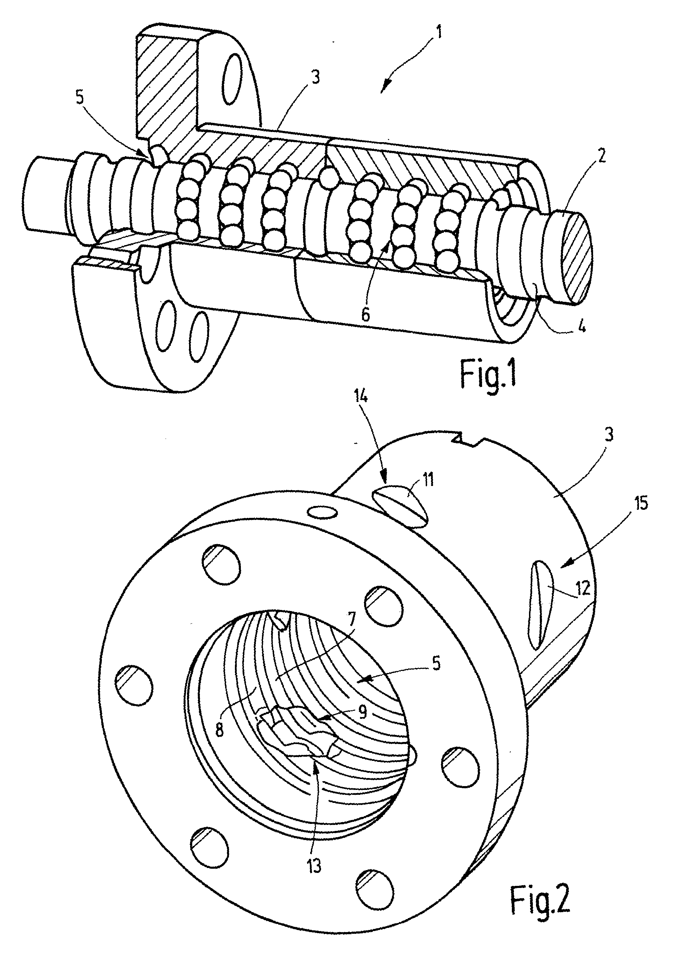

In Figur 1 ist ein Kugelgewindetrieb 1 veranschaulicht, der eine Gewindespindel 2 und eine Gewindemutter 3 aufweist. Während die Gewindespindel 2 mit einem Außengewinde 4 versehen, ist die Gewindemutter 3 mit einem Innengewinde 5 versehen. Das Außengewinde 4 und das Innengewinde 5 bilden jeweils eine Laufbahn. Die Laufbahnen definieren gemeinsam einen schraubenförmig gewundenen Kanal, in dem Kugeln 6 angeordnet sind.

Die Gewindemutter 3 ist in Figur 2 gesondert veranschaulicht. Das Innengewinde 5 ist im vorliegenden Beispiel ein eingängiges Gewinde. Zwischen benachbarten Windungen 7, 8 ist ein Umlenkstück 9 angeordnet. Dieses dient zum Umsetzen von Kugeln 6 zwischen den Windungen 7, 8. Weitere Umlenkstücke 11, 12 sind an anderen Stellen des Gewindes 5 angeordnet, um ebenfalls jeweils benachbarte Windungen untereinander zu verbinden. Die Umlenkstücke 9, 11, 12 sind an axial und in Umfangsrichtung voneinander beabstandeten Stellen angeordnet. Sie schließen jeweils einen Kugelumlauf (Kreislauf), der die Kugeln um genau 360°, bezogen auf die Längsachse der Spindelmutter, führt.

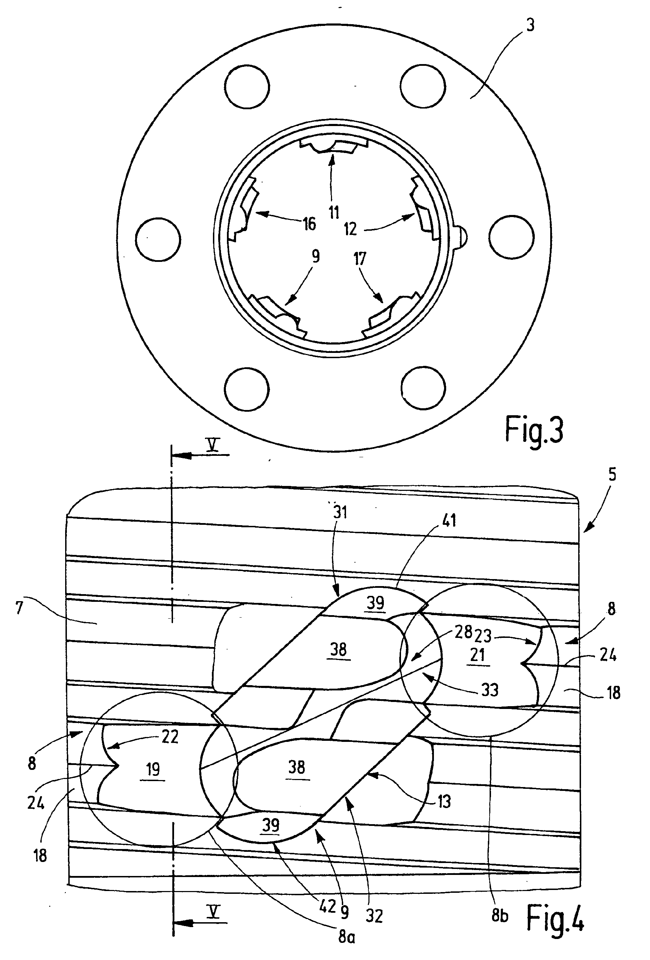

Die Umlenkstücke 9, 11, 12 sind in Radialöffnungen 13, 14, 15 eingesetzt, die den Grundkörper der Gewindemutter 3 in Radialrichtung durchsetzen. Die Radialöffnungen 13, 14, 15 sind vorzugsweise als Langlöcher ausgebildet. Die Langlöcher sind schräg gestellt. Die Längsrichtung dieser Langlöcher ist vorzugsweise um etwa 45° zu den einzelnen Windungen geneigt. Die Umlenkstücke 9, 11, 12 sitzen vorzugsweise mit leichter Vorspannung, d.h. spielarm oder spielfrei, in den Radialöffnungen 13, 14, 15. Wie Figur 3 veranschaulicht, sind nicht nur die drei aus Figur 2 ersichtlichen Umlenkstücke 9, 11, 12 sondern bedarfsweise weitere Umlenkstücke 16, 17 um den Umfang der Gewindemutter 3 verteilt angeordnet. Sie ragen jeweils über die Innenfläche der Gewindemutter 3 nach innen vor, um mit entsprechenden Abschnitten Kugeln aus dem Außengewinde der Gewindespindel 3 aufnehmen zu können.

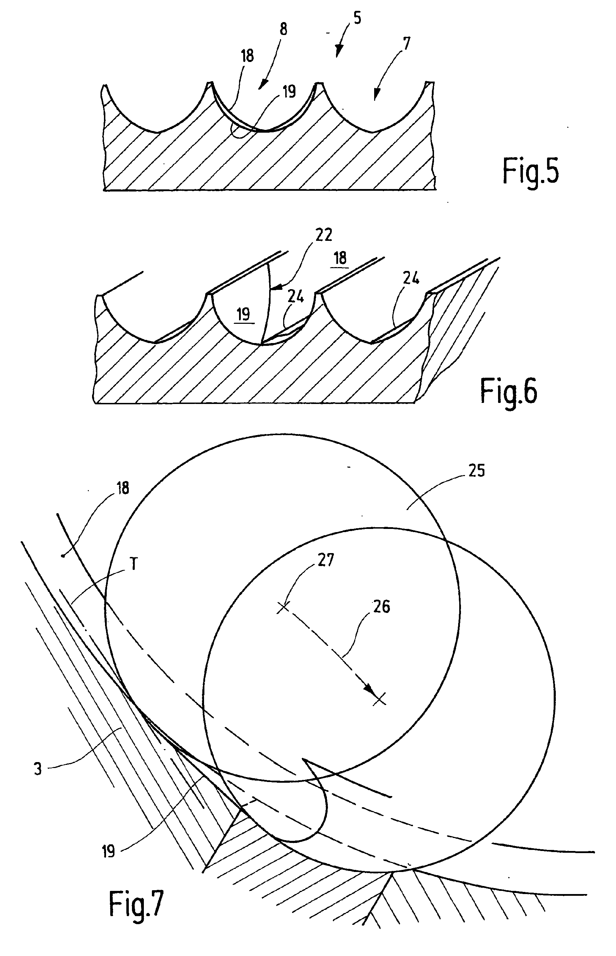

Figur 4 veranschaulicht die untereinander gleich ausgestalteten Umlenkstücke 9, 11, 12, 16, 17 anhand des Beispiels des Umlenkstücks 9 und der so gebildeten Umlenkstelle zwischen dem Anfang und dem Ende der Windung 8, die in Figur 4 mit 8a und 8b bezeichnet sind.

Die Windung 8 weist, wie insbesondere aus Figur 5 ersichtlich ist, ein Spitzbogenprofil 18 auf. Dieses ist auch für alle übrigen Windungen, z.B. die Windung 7 vorgesehen. Das Spitzbogenprofil 18 bildet die Laufbahn für den lasttragenden Bereich des Innengewindes. In den aufeinander zu weisenden Enden 8a, 8b der Windung 8, die an das Umlenkstück 9 anschließen, sind Übergangsprofile 19, 21 vorgesehen, die gegenüber dem Spitzbogenprofil 18 radial nach außen vertieft sind. Das Übergangsprofil 19, 21 ist, wie aus Figur 5 für das Übergangsprofil 19 ersichtlich, beispielsweise ein Rundbogenprofil. Es kann sich jedoch bedarfsweise auch um ein anderes Profil, wie beispielsweise ein abgeflachtes Rundbogenprofil oder ein Spitzbogenprofil handeln. Der Übergang zwischen dem Übergangsprofil 19, 21 und dem Spitzbogenprofil 18, das als Tragprofil dient, ist jeweils durch eine V-förmige Kante 22, 23 geschaffen. Die Spitze dieser V-förmigen Kante liegt dabei an der Scheitellinie 24 des Spitzbogenprofils 18. Dies ist insbesondere auch aus Figur 6 ersichtlich.

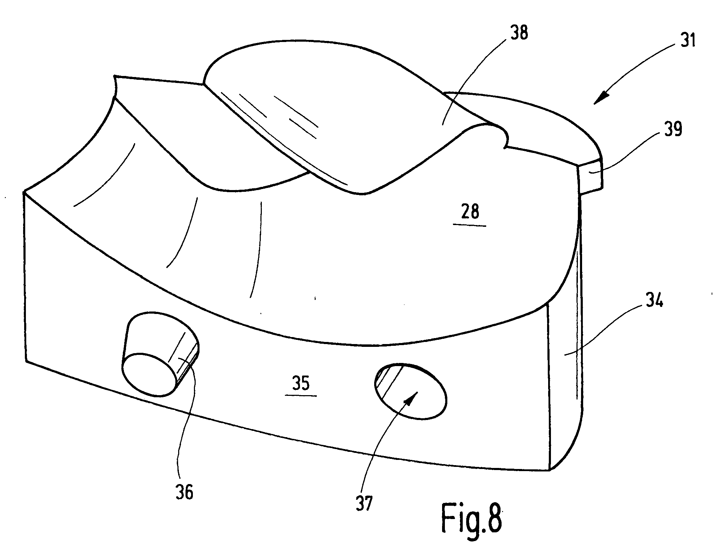

Zur Erzeugung des Übergangsprofils 19 bzw. 21 wird auf Figur 7 verwiesen. In dieser ist die Erzeugung am Beispiel des Übergangsprofils 19 veranschaulicht. Nach dem Ausbilden der Laufbahn des Innengewindes 5 beispielsweise als Spitzbogenprofil 18 oder als anderes geeignetes Tragprofil wird ein zum definierten Materialabtrag eingerichtetes Werkzeug 25, wie beispielsweise ein Scheibenfräser oder eine entsprechend geformte Schleifscheibe, in die von der Gewindemutter 3 umschlossene Öffnung eingeführt. Der Durchmesser dieses Werkzeugs 25 ist geringer als der Öffnungsdurchmesser der Gewindemutter 3. Das Werkzeug 25 wird dann aktiviert, beispielsweise in Drehung versetzt, und auf einer Bahn 26 geführt. Diese Bahn beginnt bezüglich der Drehachse 27 des Werkzeugs 25 an einer Stelle, bei der der Außenumfang des Werkzeugs 25 mit einer Tangente T die Laufbahn bzw. das Spitzbogenprofil 18 mit einem Winkel von Null oder einem sehr kleinen spitzen Winkel berührt. Dieser ist kleiner als der Rollreibungswinkel der Kugeln. Von diesem Punkt ausgehend, verläuft die Bahn 26 mit einer Krümmung nach außen, die kleiner ist als die sonstige Krümmung des Gewindes. Die von dem Übergangsprofil 19 gebildete Übergangsbahn endet deshalb an einem Radius, der einige Zehntel Millimeter größer ist als der Radius an der Übergangsstelle zum Tragprofil 18. Sie kann gerade sein oder, wie dargestellt, leicht gekrümmt, so dass das Werkzeug 25 im Verlauf seiner Vorschubbewegung radial nach außen in das Material der Spindelmutter 3 abtaucht. Die radiale Bewegungskomponente kann dabei im Bereich von wenigen Zehntel Millimetern liegen. Auf diese Weise wird das Übergangsprofil 19 geschaffen. Dieses schließt unmittelbar an einen Umleitkanal 28 an, der in dem Umlenkstück 9 ausgebildet ist. Zum besseren Verständnis der Ausbildung desselben wird auf die Figuren 4 und 8 verwiesen. Das Umlenkstück ist vorzugsweise zweiteilig aufgebaut. Seine Teilstücke 31, 32 sind vorzugsweise aus Kunststoff und spiegelsymmetrisch zueinander ausgebildet. Sie grenzen bei einer Trennebene 33 aneinander. Diese Trennebene verläuft längs durch den Umlenkkanal 28.

Das Teilstück 31 ist in Figur 8 gesondert veranschaulicht. Es weist an die Trennebene 33 grenzend einen Schaft 34 auf, der mit einer Planfläche 35 versehen ist, die die Trennebene 33 festlegt. Über die Planfläche 35 steht ein vorzugsweise kegelstumpfförmiger Noppen 36 hervor, dem an entsprechender Stelle eine komplementär geformte Ausnehmung 37 zugeordnet ist. Der Noppen 36 und die Ausnehmung 37 sind so angeordnet und geformt, dass zwei identische Teilstücke 31, 32 an der Planfläche 35 zusammengefügt werden können, wobei der Noppen 36 in die Ausnehmung 37 des jeweils anderen Teilstücks greift und die Teilstücke 31, 32 an dem Umlenkkanal 28 absatzlos aneinander passen. An der Trennebene 33 entsteht somit keine Stufe.

Der Umlenkkanal 28 ist, wie insbesondere aus Figur 4 hervorgeht, etwa S-förmig gewunden. Er wird an beiden Enden jeweils von einem Aufnehmer 38 überdeckt, der einstückig mit dem jeweiligen Teilstück 31, 32 ausgebildet ist und nach Art einer Bonbonschaufel in den Gewindegang der Gewindespindel 2 ragt. Er dient dazu, die Kugeln aus dem Gewinde heraus in den Umlenkkanal 28 zu leiten.

An der der Planfläche 35 abgewandten Seite schließt sich an das Teilstück 31 wie an das Teilstück 32 ein kragenartiger Vorsprung 39 an, der in einer entsprechenden abgestuften Ausnehmung 41, 42 der Radialöffnung 13 liegt. Damit ist die Radialposition des Umlenkstücks 9 eindeutig festgelegt. Die Position ist so gewählt, dass in dem Übergang zwischen dem Übergangsprofil 19, 21 und dem Umlenkkanal 28 keine nennenswerte Stufe entsteht.

Ein Kugelgewindetrieb 1 weist eine Gewindemutter 3 auf, die mit wenigstens einem Umlenkstück 9 versehen ist, das zwei Enden 8a, 8b einer Windung 8 ihres Innengewindes 5 miteinander verbindet. In unmittelbarer Nachbarschaft zu dem Umlenkstück 9 sind an den Enden 8a, 8b der Windung 8 Übergangsprofile 19, 21 ausgebildet, die maschinell in den Gewindegang eingearbeitet sind. Das Übergangsprofil 19, 21 unterscheidet sich von dem Tragprofil des übrigen Gewindes dadurch, dass die Kugeln, wenn sie sich in dem Übergangsprofil 19, 21 befinden, ein gewisses Spiel aufweisen, während sie innerhalb der übrigen Windung 8 spielfrei unter Last stehen. Dies wird durch eine Änderung des Profils und/oder durch eine Vertiefung des Gewindeprofils radial nach außen erreicht.

## Patentansprüche

1. Verfahren zur Herstellung einer Spindelmutter (3) mit Gangumlenkung für einen Kugelgewindetrieb (1),
mit einem ersten Schritt, in dem in einen ringförmigen Grundkörper an seiner Innenseite wenigstens ein Gewinde (5) mit einem Tragprofil (18) eingearbeitet werden,
mit einem zweiten Schritt, in dem der Grundkörper mit Radialöffnungen (13, 14, 15) versehen wird, die Windungen (7, 8) des Gewindes (5) überbrückt,
mit einem dritten Schritt, in dem in die Windungen (7, 8) an die Radialöffnungen (13, 14, 15) anschließend mit einem zwangsgeführten Werkzeug (25) ein Übergangsprofil (19, 21) eingearbeitet wird, und
mit einem vierten Schritt, in dem in die Radialöffnungen (13, 14, 15) Umlenkstücke (9, 11, 12) eingesetzt werden, die einen Umlenkkanal (28) aufweisen, der an das Übergangsprofil (19, 21) der Gewindegänge (7, 8) anschließt.

2. Verfahren nach Anspruch 1, **dadurch gekennzeichnet, dass** das Tragprofil (18) in einem Drehvorgang oder in einem Fräsvorgang erzeugt wird.

3. Verfahren nach Anspruch 1, **dadurch gekennzeichnet, dass** Übergangsprofil (19, 21) in einem Fräsvorgang oder in einem Schleifvorgang oder in einem Erodiervorgang oder in einem Unrund-Drehvorgang erzeugt wird.

4. Verfahren nach Anspruch 3, **dadurch gekennzeichnet, dass** der Fräs- oder Schleifvorgang mit einem scheibenförmigen Fräs-, Schleif- oder Erodierwerkzeug (25) erfolgt, das dem Steigungswinkel des Innengewindes (5) entsprechend angestellt ist.

5. Verfahren nach Anspruch 1, **dadurch gekennzeichnet, dass** die Radialöffnungen (13, 14, 15) gefräst werden.

6. Verfahren nach Anspruch 1, **dadurch gekennzeichnet, dass** die Spindelmutter (3) nach Abarbeitung des ersten und des dritten Schrittes gehärtet wird.

7. Verfahren nach Anspruch 1, **dadurch gekennzeichnet, dass** die Spindelmutter (3) nach Abarbeitung der Schritte Eins bis Drei gehärtet wird.

8. Verfahren nach Anspruch 1, **dadurch gekennzeichnet, dass** die Umlenkstücke (9, 11, 12) von innen her in die Radialöffnungen (13, 14, 15) eingesetzt werden.

9. Verfahren nach Anspruch 1, **dadurch gekennzeichnet, dass** die Umlenkstücke (9, 11, 12) vor dem Einsetzen in die Spindelmutter (3) aus Teilstücken (31, 32) zusammengesetzt werden.

10. Kugelgewindetrieb (1) mit Gangumlenkung,
mit einer Gewindespindel (2), die ein ein- oder mehrgängiges Außengewinde (4) trägt,
mit einer Spindelmutter (3), die eine mit einem Innengewinde (5) versehene Durchgangsöffnung aufweist, wobei das Innengewinde (5) mit dem Außengewinde (4) in Steigung und Gangzahl übereinstimmt und ein Tragprofil (18) aufweist,
mit wenigstens einer in der Spindelmutter (3) ausgebildeten Radialöffnung (13, 14, 15), die Anfang (8a) und Ende (8b) wenigstens einer Windung (8) des Innengewindes (5) verbindet und in die jeweils ein Umlenkstück (9, 11, 12) eingesetzt ist,
wobei die Windung (8) an Stellen (8a, 8b), die unmittelbar an das Umlenkstück (9) anschließen, jeweils ein mit zwangsgeführtem Werkzeug erzeugtes Übergangsprofil (19, 21) aufweist, das gegenüber dem Tragprofil (18) ein vergrößertes Kugelspiel aufweist.

11. Kugelgewindetrieb nach Anspruch 10, **dadurch gekennzeichnet, dass** das Tragprofil (18) ein Spitzbogenprofil ist.

12. Kugelgewindetrieb nach Anspruch 10, **dadurch gekennzeichnet, dass** das Umlenkprofil (19, 21) ein Rundbogenprofil ist.

13. Kugelgewindetrieb nach Anspruch 10, **dadurch gekennzeichnet, dass** die Radialöffnungen (13, 14, 15) einen Langlochquerschnitt aufweisen.

14. Kugelgewindetrieb nach Anspruch 13, **dadurch gekennzeichnet, dass** die Längsrichtung des Langlochquerschnitts in einem Winkel von 40° bis 50° gegen die Windungen (7, 8) des Innengewindes (5) geneigt ist.

15. Kugelgewindetrieb nach Anspruch 10, **dadurch gekennzeichnet, dass** das Umlenkstück (9) aus Teilstücken (31, 32) zusammengesetzt ist.

16. Kugelgewindetrieb nach Anspruch 15, **dadurch gekennzeichnet, dass** die Teilstücke (31, 32) zueinander im Wesentlichen symmetrisch, vorzugsweise liniensymmetrisch ausgebildet sind.

17. Kugelgewindetrieb nach Anspruch 15, **dadurch gekennzeichnet, dass** die Teilstücke (31, 32) miteinander über ein Filmscharnier verbunden sind.

18. Kugelgewindetrieb nach Anspruch 10, **dadurch gekennzeichnet, dass** die Radialöffnungen (13, 14, 15) jeweils wenigstens eine Positionier- und Anlagefläche (41, 42) zur Festlegung der Radialposition des Umlenkstücks (9, 11, 12) aufweisen.

19. Kugelgewindetrieb nach Anspruch 18, **dadurch gekennzeichnet, dass** die Umlenkstücke (9, 11, 12) jeweils einen Vorsprung (39) aufweisen, der zur direkten Anlage an der Positionier- und Anlagefläche (41, 42) dient.

20. Kugelgewindetrieb nach Anspruch 10, **dadurch gekennzeichnet, dass** dem Umlenkstück (9, 11, 12) Rastmittel zur lagerichtigen Sicherung des Umlenkstücks in der Radialöffnung (13, 14, 15) zugeordnet sind.

21. Kugelgewindetrieb nach Anspruch 10, **dadurch gekennzeichnet, dass** das Umlenkstück (9) eine Umlenkbahn(28) enthält, deren Verlauf krümmungsstetig ausgebildet ist.

22. Kugelgewindetrieb nach Anspruch 10, **dadurch gekennzeichnet, dass** der Übergang zwischen dem Tragprofil (18) und dem Übergangsprofil (19, 21) an einer v-förmigen Kante (22, 23) angelegt ist.

23. Kugelgewindetrieb nach Anspruch 10 und 21, **dadurch gekennzeichnet, dass** das Übergangsprofil (19) mit dem Profil der Umlenkbahn (18) übereinstimmt.
